# EUROPEAN PATENT APPLICATION

(11) **EP 3 632 610 A1**
(43) Date of publication of application: **08.04.2020**
(21) Application number: 18806218.6
(22) Date of filing: 24.05.2018
(51) Int. Cl.: B23K 35/28, B23K 35/22, C22C 21/00, C22F 1/00, C22F 1/04

(54) **ALUMINUM ALLOY BRAZING SHEET**

(30) Priority: 24.05.2017 JP 2017103074
(71) Applicant: Kabushiki Kaisha Kobe Seiko Sho (Kobe Steel, Ltd.), Kobe-shi, Hyogo 651-8585 (JP); Denso Corporation, Kariya-shi, Aichi 448-8661 (JP)
(72) Inventor: IZUMI Takahiro, Tochigi 321-4367 (JP); TSURUNO Akihiro, Tochigi 321-4367 (JP); KIMURA Shimpei, Tochigi 321-4367 (JP); SHIBUYA Yuji, Tochigi 321-4367 (JP); SHINODA Takahiro, Aichi 448-8661 (JP); YAMADA Shogo, Aichi 448-8661 (JP); OONO Shingo, Aichi 448-8661 (JP)
(74) Representative: Müller-Boré & Partner Patentanwälte PartG mbB
(86) International application number: PCT/JP2018/020024
(87) International publication number: WO 2018/216773

(57) **Abstract**

This aluminum alloy brazing sheet is provided with: a core material comprising 2.0 mass% or less (including 0 mass%) of Mg and a remainder of Al and unavoidable impurities; and a brazing material comprising Si, Bi, Mg, and a remainder of Al and unavoidable impurities. The aluminum alloy brazing sheet satisfies the expressions 3 ≤ C_{Si} ≤ 13, 0.13C_{Mg}^{-0.3} ≤ C_{Bi} ≤ 0.58C_{Mg}^{0.45}, C_{Mg-b} ≥ 0.1, and 0.2 ≤ C_{Mg} ≤ 1.1 when the Si content of the brazing material is denoted by Csi, the Bi content of the brazing material is denoted by C_{Bi}, the Mg content of the brazing material is denoted by C_{Mg-b}, the Mg content of the core material is denoted by C_{Mg-c}, and C_{Mg} = C_{Mg-b} + C_{Mg-c} / 2.

## Description

### TECHNICAL FIELD

The present invention relates to an aluminum alloy brazing sheet, in particular, an aluminum alloy brazing sheet for application to brazing methods in which no flux is used, i.e., the so-called flux-less brazing.

### BACKGROUND ART

Among methods for brazing aluminum-alloy members for, for example, a heat exchanger, there is a method called vacuum brazing, in which the members are brazed in a vacuum without using a flux.

Compared to flux brazing in which a flux is used, the vacuum brazing has various merits including no need of applying a flux and freedom from problems caused by improper flux application amounts.

However, since vacuum brazing necessitates an expensive vacuum furnace for heating the work while keeping the inside of the furnace vacuum during brazing, an operation cost is increased. In addition, it is difficult to control the inside of the evacuated furnace and thus the operation becomes more difficult.

In order to overcome such problems, investigations have been made on flux-less brazing in which brazing is performed in a non-vacuum atmosphere without using a flux, and the following technique has been proposed.

Specifically, Patent Literature 1 discloses a brazing method for a heat exchanger having fine-channel inner fins, in which use is made of an aluminum-clad material including an Al-Si brazing filler material containing from 0.1 to 5.0 mass% of Mg and from 3 to 13 mass% of Si as an outermost surface layer. In this method, the Al-Si brazing filler material contains Si particles, and the proportion of the number of Si particles having a diameter, in terms of equivalent circular diameter, of 1.75 µm or larger to the number of Si particles having a diameter of 0.8 µm or larger is 25% or higher, and in a non-oxidizing atmosphere involving no depressurization, the Al-Si brazing filler material is brought into close contact with a member to be brazed and the aluminum-clad material is bonded to the member to be brazed at a heating temperature of from 559 to 620°C.

### CITATION LIST

### PATENT LITERATURE

Patent Literature 1: Japanese Patent No. 5619538

### SUMMARY OF INVENTION

### TECHNICAL PROBLEM

The technique according to Patent Literature 1 is a technique concerning flux-less brazing performed in a non-vacuum inert gas atmosphere, and given effects are discussed.

However, the technique according to Patent Literature 1 cannot exhibit sufficient brazing properties. Specifically, the brazing filler materials of the Examples 1 to 23 and 29 to 58 of Patent Literature 1 contain Mg in amounts of from 0.1 to 3 mass% and Mg undesirably accelerates the formation of MgO in the brazing filler material surfaces during temperature rising in heating for brazing. As a result, there is a possibility in the Examples 1 to 23 and 29 to 58 of Patent Literature 1 that MgO in the brazing filler material surfaces might constitute an obstacle during melting of the brazing fillers to reduce the brazing properties.

Although the brazing filler materials of the Examples 24 to 28 of Patent Literature 1 contain Bi, in the Examples 24 to 26, Bi content of the brazing tiller materials are too low and in the Examples 27 and 28, Bi content of the brazing filler materials are too high. In each case, the brazing filler materials cannot hence sufficiently exhibit brazing properties.

Accordingly, an object of the present invention is to provide an aluminum alloy brazing sheet having excellent brazing properties.

### SOLUTION TO PROBLEM

Namely, the aluminum alloy brazing sheet in the present invention includes a core material and a brazing filler material disposed on at least one surface of the core material, in which the core material has an Mg content of 2.0 mass% or less (including 0 mass%), with the remainder being Al and unavoidable impurities, and the brazing filler material contains Si, Bi, and Mg, with the remainder being Al and unavoidable impurities, and the following relationships are satisfied: 3≤C_{Si}≤13; 0.13C_{Mg}^{-0.3}≤C_{Bi}≤0.58C_{Mg}^{0.45}; C_{Mg-b}≥0.1; and 0.2≤C_{Mg}≤1.1, in which Csi is an Si content of the brazing filler material in mass%, C_{Bi} is a Bi content of the brazing filler material in mass%, C_{Mg-b} is an Mg content of the brazing filler material in mass%, C_{Mg-c} is an Mg content of the core material in mass% and C_{Mg} is defined as C_{Mg}=C_{Mg-b}+C_{Mg-c}/2.

As shown above, in the aluminum alloy brazing sheet in the present invention, the core material and the brazing filler material have specified component contents. For example, this aluminum alloy brazing sheet has a specified relationship between the Mg contents of the core material and brazing filler material and the Bi content of the brazing filler material. Because of this, Mg of the core material and brazing filler material reacts with (is trapped by) Bi of the brazing filler material and this inhibits the formation of MgO in the surface of the brazing filler material. Furthermore, when the brazing filler is in a molten state during heating for brazing, Mg which has reacted with Bi dissolves in the matrix (brazing filler material) and, hence, the vaporization of Mg is promoted. As a result, not only an oxide film formed in the surface of the brazing filler material is advantageously destroyed by Mg vaporization but also Mg reacts with atmospheric oxygen to lower the oxygen concentration of the atmosphere and thereby inhibit the molten brazing filler from being oxidized again. In addition, Bi which has dissolved in the matrix enhances the flowability of the brazing filler. As a result, the aluminum alloy brazing sheet in the present invention has excellent brazing properties.

In the aluminum alloy brazing sheet in the present invention, the brazing filler material may further contain one or more of 2.0 mass% or less of Mn, 0.3 mass% or less of Ti, 0.3 mass% or less of Cr, and 0.3 mass% or less of Zr. In the aluminum alloy brazing sheet in the present invention, the brazing filler material may further contain up to 5.0 mass% or less of Zn. In the aluminum alloy brazing sheet in the present invention, the brazing filler material may further contain one or more of 0.10 mass% or less of Sr, 0.050 mass% or less of Na, and 0.5 mass% or less of Sb. In the aluminum alloy brazing sheet in the present invention, the brazing filler material may further contain 1.0 mass% or less of one or more rare-earth elements.

As described above, the aluminum alloy brazing sheet in the present invention has excellent brazing properties also in the case where the brazing filler material contains Mn, Ti, Cr, Zr, Zn, Sr, Na, Sb, or rare-earth elements.

In the aluminum alloy brazing sheet in the present invention, the brazing filler material may further contain 0.3 mass% or less of Li.

In the case where the brazing filler material thus contains Li, the aluminum alloy brazing sheet in the present invention can have further improved brazing properties.

In the aluminum alloy brazing sheet in the present invention, the core material may further contain 2.5 mass% or less of Mn. In the aluminum alloy brazing sheet in the present invention, the core material may further contain 1.2 mass% or less of Si. In the aluminum alloy brazing sheet in the present invention, the core material may further contain 3.0 mass% or less of Cu. In the aluminum alloy brazing sheet in the present invention, the core material may further contain 1.5 mass% or less of Fe. In the aluminum alloy brazing sheet in the present invention, the core material may further contain one or more of 0.5 mass% or less of Ti, 0.5 mass% or less of Cr, and 0.5 mass% or less of Zr.

The aluminum alloy brazing sheet in the present invention has excellent brazing properties also in the case where the core material thus contains Mn, Si, Cu, Fe, Ti, Cr, or Zr.

In the aluminum alloy brazing sheet in the present invention, the core material may further contain 0.3 mass% or less of Li.

In the case where the core material thus contains Li, the aluminum alloy brazing sheet in the present invention can have further improved brazing properties.

In the aluminum alloy brazing sheet in the present invention, the brazing filler material may have a thickness of 50 µm or larger.

In the case where the brazing filler material thus has a thickness of the given value or more, the aluminum alloy brazing sheet in the present invention can more reliably exhibit excellent brazing properties.

### ADVANTAGEOUS EFFECTS OF THE INVENTION

The aluminum alloy brazing sheet in the present invention has excellent brazing properties since the core material and the brazing filler material have specified component contents.

### BRIEF DESCRIPTION OF THE DRAWINGS

[FIG. 1] FIG. 1 is a cross-sectional view of an aluminum alloy brazing sheet in this embodiment.
[FIG. 2A] FIG. 2A is a slant view for illustrating a test method for evaluating brazing properties, in which a lower material and an upper material have been combined.
[FIG. 2B] FIG. 2B is a side view for illustrating the test method for evaluating brazing properties, in which the lower material and the upper material have been combined.
[FIG. 3] FIG. 3 is a graph illustrating relationships between the Bi content of the brazing filler material and the Mg content of the brazing filler material and core material, in some of the Examples.
[FIG. 4] FIG. 4 is a graph illustrating relationships between the Mg content of the brazing filler material and the Mg content of the core material, in some of the Examples.

### DESCRIPTION OF EMBODIMENTS

Modes (embodiments) for providing the aluminum alloy brazing sheet in the present invention are described below by referring to the drawings appropriately.

### [Aluminum Alloy Brazing Sheet]

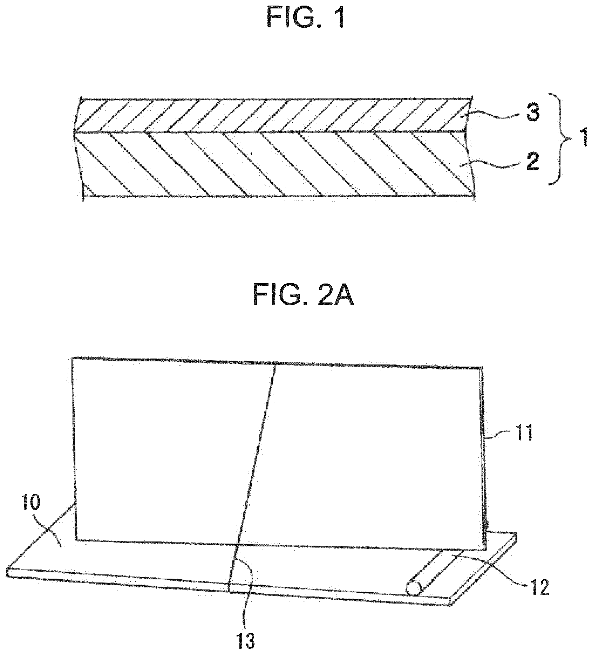

An aluminum alloy brazing sheet (hereinafter suitably referred to as "brazing sheet") in this embodiment has a configuration which, for example, includes a core material 2 and a brazing filler material 3 disposed on one surface of the core material 2, as shown in FIG. 1.

In the brazing sheet 1 in this embodiment, the contents of components in the core material 2 and the brazing filler material 3 are suitably specified.

Reasons for limiting the contents of components in the core material and brazing filler material of the brazing sheet in this embodiment to specific ranges are described below in detail.

### [Core Material]

The core material of the brazing sheet in this embodiment has an Mg content of 2.0 mass% or less (including 0 mass%), with the remainder being Al and unavoidable impurities.

The core material of the brazing sheet in this embodiment may suitably contain Mn, Si, Cu, Fe, Ti, Cr, Zr, or Li.

### (Mg in core material: 2.0 mass% or less)

Mg in the core material improves the strength. Mg in the core material diffuses to the brazing filler material during temperature rising in heating for brazing and vaporizes to the atmosphere at brazing-filler melting temperatures to react with oxygen in the atmosphere. As a result, an oxide film formed in the surface of the brazing filler material is advantageously destroyed by the Mg vaporization and the oxygen concentration of the atmosphere is lowered to inhibit the molten brazing filler from being oxidized again (getter function), thereby improving the brazing properties. Mg in the brazing filler material also performs a getter function. Because of this, in the case where the brazing filler material has a high Mg content, the Mg content of the core material may be low and may be 0 mass%.

Meanwhile, in the case where the content of Mg exceeds 2.0 mass%, Mg cannot be sufficiently trapped by Bi of the brazing filler material and the formation of MgO in the surface of the brazing filler material is promoted undesirably, resulting in a decrease in brazing property.

Consequently, the Mg content of the core material is 2.0 mass% or less (including 0 mass%).

### (Mn in core material: 2.5 mass% or less)

Mn in the core material improves the strength. However, in the case where the content of Mn exceeds 2.5 mass%, the amount of Al-Mn compounds may increase and there is a possibility of cracking during a step for material production.

Consequently, in the case of incorporating Mn into the core material, the content of Mn is 2.5 mass% or less.

From the standpoint of more reliably obtaining the strength-improving effect of incorporating Mn, the Mn content of the core material is preferably 0.5 mass% or higher.

### (Si in core material: 1.2 mass% or less)

Si in the core material improves the strength. However, in the case where the content of Si exceeds 1.2 mass%, the solidus temperature of the core material is reduced and this not only results in reduced erosion resistance but also results in reduced brazing-filler flowability and hence brazing property is deteriorated.

Consequently, in the case of incorporating Si into the core material, the content of Si is 1.2 mass% or less.

From the standpoint of more reliably obtaining the strength-improving effect by incorporating Si, the Si content of the core material is preferably 0.05 mass% or higher.

### (Cu in core material: 3.0 mass% or less)

Cu in the core material makes the potential of the core material noble, thereby improving the corrosion resistance. However, in the case where the content of Cu exceeds 3.0 mass%, the solidus temperature of the core material is reduced and this not only results in reduced erosion resistance but also results in reduced brazing-filler flowability and hence brazing property is deteriorated.

Consequently, in the case of incorporating Cu into the core material, the content of Cu is 3.0 mass% or less.

From the standpoint of more reliably obtaining the corrosion-resistance-improving effect by incorporating Cu, the Cu content of the core material is preferably 0.05 mass% or higher.

### (Fe in core material: 1.5 mass% or less)

Fe in the core material improves the strength by solid-solution-hardening effect. However, in the case where the content of Fe exceeds 1.5 mass%, there is a possibility that coarse intermetallic compounds might be formed to reduce the formability.

Consequently, in the case of incorporating Fe into the core material, the content of Fe is 1.5 mass% or less.

From the standpoint of more reliably obtaining the strength-improving effect by incorporating Fe, the Fe content of the core material is preferably 0.05 mass% or higher.

### (Ti in core material: 0.5 mass% or less)

Ti in the core material makes the potential of the core material noble, thereby improving the corrosion resistance. However, in the case where the content of Ti exceeds 0.5 mass%, there is a possibility that coarse intermetallic compounds might be formed to reduce the formability.

Consequently, in the case of incorporating Ti into the core material, the content of Ti is 0.5 mass% or less.

From the standpoint of more reliably obtaining the corrosion-resistance-improving effect by incorporating Ti, the Ti content of the core material is preferably 0.01 mass% or higher.

### (Cr in core material: 0.5 mass% or less)

Cr in the core material forms Al-Cr dispersed particles and thereby improves the strength of the core material. However, in the case where the content of Cr exceeds 0.5 mass%, there is a possibility that coarse intermetallic compounds might be formed to reduce the formability.

Consequently, in the case of incorporating Cr into the core material, the content of Cr is 0.5 mass% or less.

From the standpoint of more reliably obtaining the strength-improving effect by incorporating Cr, the Cr content of the core material is preferably 0.01 mass% or higher.

### (Zr in core material: 0.5 mass% or less)

Zr in the core material forms Al-Zr dispersed particles and thereby improves the strength of the core material. However, in the case where the content of Zr exceeds 0.5 mass%, there is a possibility that coarse intermetallic compounds might be formed to reduce the formability.

Consequently, in the case of incorporating Zr into the core material, the content of Zr therein is 0.5 mass% or less.

From the standpoint of more reliably obtaining the strength-improving effect by incorporating Zr, the Zr content of the core material is preferably 0.01 mass% or higher.

One or more of Ti, Cr, and Zr may be contained in the core material, that is, either only one of these or two or more thereof may be contained, so long as the contents thereof do not exceed the upper limits. This does not prevent the effect of the invention.

### (Li in core material: 0.3 mass% or less)

Li in the core material further improves the brazing properties. Although the mechanism by which Li improves the brazing properties has not been elucidated in detail, it is presumed that when the brazing filler is in a molten state during heating for brazing, Li destroys an oxide film formed in the surface of the brazing filler material, thereby enabling Mg to further effectively perform the getter function. However, in the case where the content of Li exceeds 0.3 mass%, Li diffusion to a surface-layer portion of the brazing filler material occurs during temperature rising in heating for brazing to promote the growth of the oxide film, resulting in a decrease in brazing property.

Consequently, in the case of incorporating Li into the core material, the content of Li is 0.3 mass% or less.

From the standpoint of inhibiting the growth of the oxide film, the Li content of the core material is preferably 0.05 mass% or less.

### (Remainder of core material: Al and unavoidable impurities)

It is preferable that the remainder of the core material is Al and unavoidable impurities. Examples of the unavoidable impurities in the core material include V, Ni, Ca, Na, and Sr, and these elements may be contained so long as the effect of the invention is not prevented thereby. Specifically, 0.05 mass% or less of V, 0.05 mass% or less of Ni, 0.05 mass% or less of Ca, 0.05 mass% or less of Na, 0.05 mass% or less of Sr, and less than 0.01 mass% of each other element may be contained.

So long as the contents of these elements do not exceed the given values, the inclusion of these elements does not prevent the effect of the invention and is acceptable, regardless of whether these elements are contained as unavoidable impurities or are added intentionally.

Although Mg, Mn, Si, Cu, Fe, Ti, Cr, Zr, and Li, which are described above, may be intentionally added, these elements may be contained as unavoidable impurities.

### [Brazing Filler Material]

The brazing filler material of the brazing sheet in this embodiment includes Si, Bi, and Mg, with a remainder being Al and unavoidable impurities.

The brazing filler material of the brazing sheet in this embodiment may suitably contain Mn, Ti, Cr, Zr, Zn, Sr, Na, Sb, rare-earth elements, or Li.

### (Si in brazing filler material: from 3 to 13 mass%; 3≤C_{Si}≤13)

Si in the brazing filler material lowers the solidus temperature of the brazing filler material and thereby increases the proportion of liquid phase at the brazing heating temperature to enhance the flowability of the brazing filler. In the case where the content of Si is 3 mass% or higher, the flowability of the brazing filler is increased and the effect of improving the brazing properties is obtained. Meanwhile, in the case where the content of Si exceeds 13 mass%, not only coarse Si particles are formed but also there is a possibility that a fluidized brazing filler might be yielded in excess to cause brazing failures, e.g., core-material melting.

Consequently, the content of Si in the brazing filler material is from 3 to 13 mass%. When the content of Si in the brazing filler material is expressed as Csi mass%, 3≤C_{Si}≤13 is satisfied.

### (Bi in brazing filler material: 0.13C_{Mg}^{-0.3}≤C_{Bi}≤0.58C_{Mg}^{0.45})

Bi in the brazing filler material reacts with Mg contained in the core material and brazing filler material to yield Mg-Bi compounds (e.g., Bi₂Mg₃) which hardly dissolve at a temperature equal to or less than the brazing-filler melting temperature. As a result, in a step for material production and during temperature rising to a brazing-filler melting initiation temperature in heating for brazing, Mg is inhibited from diffusing to a surface-layer portion of the brazing filler material and the formation and growth of MgO in the surface of the brazing filler material (Mg-trapping function) are inhibited, thereby improving the brazing properties. At brazing-filler melting temperatures in heating for brazing, the Mg-Bi compounds dissolve in the matrix (brazing filler material) and, hence, vaporization of Mg is promoted. Hence, an oxide film formed in the surface of the brazing filler material is advantageously destroyed when Mg vaporizes and Mg has the improved function (getter function) of reacting with atmospheric oxygen to lower the oxygen concentration of the atmosphere and thereby inhibit the molten brazing filler from being oxidized again. Thus, the brazing properties are improved. Furthermore, Bi enhances the flowability of the brazing filler to improve the brazing properties.

For enabling the above-described effects to be properly exhibited, it is necessary to highly minutely specify the Bi content of the brazing filler material in terms of relationships with the Mg contents of the core material and brazing filler material.

Specifically, when the Mg content of the brazing filler material is expressed as C_{Mg-b} mass%, the Mg content of the core material is expressed as C_{Mg-c} mass%, and C_{Mg} is defined as C_{Mg}=C_{Mg-b}+C_{Mg-c}/2, in the case where the brazing filler material has the Bi content of less than 0.13C_{Mg}^{-0.3}, Mg cannot be sufficiently trapped and free Mg in the brazing filler material increases, undesirably resulting in the formation of MgO in the surface of the brazing filler material. In addition, in the case where the brazing filler material has the Bi content of less than 0.13C_{Mg}^{-0.3}, the flowability of the brazing filler is decreased, resulting in a decrease in brazing property.

Meanwhile, in the case where the Bi content of the brazing filler material exceeds 0.58C_{Mg}^{0.45}, this also results in a decrease in brazing property. Although the mechanism therefor has not been elucidated in detail, it is presumed that a higher Bi content relative to Mg content results in enhanced formation of low-melting-point Bi simple substance or Bi containing compounds and these compounds begin to melt and spread at low temperatures during heating for brazing to form and grow an oxide film, which undesirably inhibits the getter function.

Consequently, the Bi content of the brazing filler material is from 0.13C_{Mg}^{-0.3} to 0.58C_{Mg}^{0.45}. When the Bi content of the brazing filler material is expressed as C_{Bi} mass%, 0.13C_{Mg}^{-0.3}≤C_{Bi}≤0.58C_{Mg}^{0.45} is satisfied.

The coefficients in "0.13C_{Mg}^{-0.3}≤C_{Bi}≤0.58C_{Mg}^{0.45}" are for specifying a range for providing the effects described above, and have been obtained from the results of a large number of experiments.

### (Mg in brazing filler material: 0.1 mass% or higher; C_{Mg-b}≥0.1)

Like Mg in the core material, Mg in the brazing filler material vaporizes to the atmosphere at brazing-filler melting temperatures during heating for brazing so as to react with oxygen present in the atmosphere. As a result, an oxide film formed in the surface of the brazing filler material is advantageously destroyed by the Mg vaporization and Mg lowers the oxygen concentration of the atmosphere to inhibit the molten brazing filler from being oxidized again (getter function), thereby improving the brazing properties. Since Mg in the core material also performs a getter function, the Mg content of the brazing filler material may be low in the case where the core material has a high Mg content.

However, in the case where the content of Mg is less than 0.1 mass%, ear cracking is prone to occur during hot rolling, resulting in a decrease in yield of the brazing sheet. Although the mechanism therefor has not been elucidated in detail, it is presumed that a low Mg content in the brazing filler material results in enhanced formation of low-melting-point Bi simple substance or Bi containing compounds and these compounds melt during hot rolling to induce hot-rolling cracking. In the case where the content of Mg is 0.1 mass% or higher, Mg reacts with Bi to form Bi₂Mg₃, which has a high melting point and is less likely to melt in hot rolling, so that hot-rolling cracking can be avoided.

Consequently, the Mg content of the brazing filler material is 0.1 mass% or higher. When the Mg content of the brazing filler material is expressed as C_{Mg-b} mass%, C_{Mg-b}≥0.1 is satisfied.

### (Mg in brazing filler material and Mg in core material: 0.2≤C_{Mg}≤1.1)

Mg in the brazing filler material and Mg in the core material each have the getter function to improve the brazing properties as described above.

However, Mg in the brazing filler material and Mg in the core material differ in, for example, the degree of contribution to getter function. Because of this, for properly providing the effect of improving brazing properties by getter function, it is necessary to minutely specify the Mg content of the brazing filler material and the Mg content of the core material.

When the Mg content of the brazing filler material is expressed as C_{Mg-b} mass%, the Mg content of the core material is expressed as C_{Mg-c} mass%, and C_{Mg} is defined as C_{Mg}=C_{Mg-b}+C_{Mg-c}/2, in the case where C_{Mg} is less than 0.2, there is a possibility that the getter function of Mg might be insufficient, resulting in a decrease in brazing property. Meanwhile, in the case where C_{Mg} exceeds 1.1, there is a possibility that Mg cannot be sufficiently trapped by Bi of the brazing filler material and the formation of MgO in the surface of the brazing filler material is undesirably promoted, resulting in a decrease in brazing property.

Consequently, 0.2≤C_{M}g≤1.1 is satisfied.

From the standpoint of more reliably obtaining the getter function due to the incorporation of Mg, C_{Mg} is preferably 0.3 or higher. From the standpoint of inhibiting the brazing properties from decreasing, C_{Mg} is preferably 0.9 or less.

The coefficients in "C_{Mg}=C_{Mg-b}+C_{mg-c}/2" are for specifying a range for providing the effect described above, by taking account of, for example, the degrees in which Mg in the brazing filler material and the Mg in the core material contribute to getter function, and the coefficients have been obtained from the results of a large number of experiments.

### (Mn in brazing filler material: 2.0 mass% or less)

Mn in the brazing filler material improves the corrosion resistance. Although the mechanism by which Mn improves the corrosion resistance has not been elucidated in detail, it is presumed that Al-Mn-Si compounds are formed, and an Mn- and Si-deficient layer around the compounds becomes a portion having a less noble potential and preferentially undergoes corrosion. Hence, corrosion proceeds dispersedly, thereby improving the corrosion resistance. However, in the case where the content of Mn exceeds 2.0 mass%, a large proportion of Si is consumed by forming Al-Mn-Si compounds, resulting in a decrease in Si concentration and hence in reduced brazing properties.

Consequently, in the case of incorporating Mn into the brazing filler material, the Mn content of the brazing filler material is 2.0 mass% or less.

From the standpoint of more reliably obtaining the corrosion-resistance-improving effect by incorporating Mn, the Mn content of the brazing filler material is preferably 0.05 mass% or higher. From the standpoint of inhibiting the brazing properties from decreasing due to a decrease in Si concentration, the Mn content of the brazing filler material is preferably 1.2 mass% or less.

### (Ti in brazing filler material: 0.3 mass% or less)

Ti in the brazing filler material improves the corrosion resistance. Although the mechanism by which Ti improves the corrosion resistance has not been elucidated in detail, it is presumed that Al-Ti compounds are formed, and a Ti-deficient layer around the compounds becomes a portion having a less noble potential and preferentially undergoes corrosion. Hence, corrosion proceeds dispersedly, thereby improving the corrosion resistance. However, in the case where the content of Ti exceeds 0.3 mass%, coarse compounds are yielded during melting and casting, and cracking is likely to occur during material production, which makes the production difficult.

Consequently, in the case of incorporating Ti into the brazing filler material, the Ti content of the brazing filler material is 0.3 mass% or less.

From the standpoint of more reliably obtaining the corrosion-resistance-improving effect by incorporating Ti, the Ti content of the brazing filler material is preferably 0.05 mass% or higher. From the standpoint of inhibiting cracking during material production, the Ti content of the brazing filler material is preferably 0.2 mass% or less.

### (Cr in brazing filler material: 0.3 mass% or less)

Cr in the brazing filler material improves the corrosion resistance. Although the mechanism by which the Cr improves the corrosion resistance has not been elucidated in detail, it is presumed that Al-Cr and Al-Cr-Si compounds are formed, and a Cr- or Si-deficient layer around the compounds becomes a portion having a less noble potential and preferentially undergoes corrosion. Hence, corrosion proceeds dispersedly, thereby improving the corrosion resistance. However, in the case where the content of Cr exceeds 0.3 mass%, coarse compounds are yielded during melting and casting, and cracking is likely to occur during material production, which makes the production difficult.

Consequently, in the case of incorporating Cr into the brazing filler material, the Cr content of the brazing filler material is 0.3 mass% or less.

From the standpoint of more reliably obtaining the corrosion-resistance-improving effect by incorporating Cr, the Cr content of the brazing filler material is preferably 0.05 mass% or higher. From the standpoint of inhibiting cracking during material production, the Cr content of the brazing filler material is preferably 0.2 mass% or less.

### (Zr in brazing filler material: 0.3 mass% or less)

Zr in the brazing filler material improves the corrosion resistance. Although the mechanism by which the Zr improves the corrosion resistance has not been elucidated in detail, it is presumed that the Al-Zr compounds are formed, and a Zr-deficient layer around the compounds becomes a portion having a less noble potential and preferentially undergoes corrosion. Hence, corrosion proceeds dispersedly, thereby improving the corrosion resistance. However, in the case where the content of Zr exceeds 0.3 mass%, coarse compounds are yielded during melting and casting, and cracking is likely to occur during material production, which makes the production difficult.

Consequently, in the case of incorporating Zr into the brazing filler material, the Zr content of the brazing filler material is 0.3 mass% or less.

From the standpoint of more reliably obtaining the corrosion-resistance-improving effect by incorporating Zr, the Zr content of the brazing filler material is preferably 0.05 mass% or higher. From the standpoint of inhibiting cracking during material production, the Zr content of the brazing filler material is preferably 0.2 mass% or less.

One or more of Mn, Ti, Cr, and Zr may be contained in the brazing filler material, that is, either only one of these or two or more thereof may be contained, so long as the contents thereof do not exceed the upper limits. This does not prevent the effect of the invention.

### (Zn in brazing filler material: 5.0 mass% or less)

Zn in the brazing filler material can make the potential of the brazing filler material less noble. Zn thus forms a potential difference between the brazing filler material and the core material to thereby improve the corrosion resistance by sacrificial anticorrosive effect. However, in the case where the content of Zn exceeds 5.0 mass%, there is the possibility of causing early corrosion of fillets.

Consequently, in the case of incorporating Zn into the brazing filler material, the Zn content of the brazing filler material is 5.0 mass% or less.

From the standpoint of more reliably obtaining the corrosion-resistance-improving effect by incorporating Zn, the Zn content of the brazing filler material is preferably 0.1 mass% or higher. From the standpoint of inhibiting the early corrosion of fillets, the Zn content of the brazing filler material is preferably 4.0 mass% or less.

### (Sr in brazing filler material: 0.10 mass% or less)

Sr in the brazing filler material serves to form finer eutectic Si and thereby inhibits coarse Si particles, which are causative of melting of the core material during heating for brazing, from crystallization. However, in the case where the content of Sr exceeds 0.10 mass%, there is a possibility that the flowability of the brazing filler might decrease to result in insufficient fillet formation in heating for brazing.

Consequently, in the case of incorporating Sr into the brazing filler material, the content of Sr is 0.10 mass% or less.

From the standpoint of more reliably obtaining the effect of forming finer eutectic Si by Sr incorporation, the Sr content of the brazing filler material is preferably 0.001 mass% or higher.

### (Na in brazing filler material: 0.050 mass% or less)

Na in the brazing filler material serves to form finer eutectic Si and thereby inhibits coarse Si particles, which are causative of melting of the core material during heating for brazing, from crystallization. However, in the case where the content of Na exceeds 0.050 mass%, there is a possibility that the flowability of the brazing filler might decrease to result in insufficient fillet formation in heating for brazing.

Consequently, in the case of incorporating Na into the brazing filler material, the content of Na is 0.050 mass% or less.

From the standpoint of more reliably obtaining the effect of forming finer eutectic Si by Na incorporation, the Na content of the brazing filler material is preferably 0.0001 mass% or higher.

### (Sb in brazing filler material: 0.5 mass% or less)

Sb in the brazing filler material serves to form finer eutectic Si and thereby inhibits coarse Si particles, which are causative of melting of the core material during heating for brazing, from crystallization. However, in the case where the content of Sb exceeds 0.5 mass%, there is a possibility that the flowability of the brazing filler might decrease to result in insufficient fillet formation in heating for brazing.

Consequently, in the case of incorporating Sb into the brazing filler material, the content of Sb is 0.5 mass% or less.

From the standpoint of more reliably obtaining the effect of forming finer eutectic Si by Sb incorporation, the Sb content of the brazing filler material is preferably 0.001 mass% or higher.

One or more of Sr, Na, and Sb may be contained in the brazing filler material, that is, either only one of these or two or more thereof may be contained, so long as the contents thereof do not exceed the upper limits. This does not prevent the effect of the invention.

### (Rare-earth elements in brazing filler material: 1.0 mass% or less)

"Rare-earth elements" is a general term for 17 elements that are Sc and Y, which are in Group 3 of the periodic table, and the lanthanoids (15 elements). Examples thereof include Sc, Y, La, Ce, Nd, and Dy. In the case of incorporating a rare-earth element in the brazing filler material, only one rare-earth element may be contained, or two or more rare-earth elements may be contained. Methods for incorporating rare-earth elements into the brazing filler material are not particularly limited. For example, an intermediate alloy of Al and rare-earth elements can be added or two or more rare-earth elements can be simultaneously incorporated by adding mischmetal.

Rare-earth elements in the brazing filler material function in the following manner: during heating for brazing, a surface oxide film (Al₂O₃) of the brazing filler material reacts with the rare-earth elements or with oxides including the rare-earth elements and the surface oxide film of the brazing filler material is thereby caused to undergo a volume reduction, and the rare-earth elements thus destroy the oxide film to improve the brazing properties. However, in the case where the content of rare-earth elements (total content in the case where two or more rare-earth elements are contained) exceeds 1.0 mass%, an oxide film including the rare-earth elements is formed in excess and the effect of destroying the oxide film decreases, resulting in a decrease in brazing property.

Consequently, in the case of incorporating rare-earth elements into the brazing filler material, the rare-earth element content of the brazing filler material is 1.0 mass% or less.

From the standpoint of more reliably obtaining the oxide-film-destroying effect by incorporating rare-earth element, the rare-earth element content of the brazing filler material is preferably 0.001 mass% or higher.

### (Li in brazing filler material: 0.3 mass% or less)

Like Li in the core material, Li in the brazing filler material further improves the brazing properties. Although the mechanism by which Li improves the brazing properties has not been elucidated in detail, it is presumed that when the brazing filler is in a molten state during heating for brazing, Li destroys an oxide film formed in the surface of the brazing filler material to thereby enable Mg to further effectively perform the getter function. However, in the case where the content of Li exceeds 0.3 mass%, Li undesirably promotes the growth of the oxide film, resulting in a decrease in brazing property.

Consequently, in the case of incorporating Li into the brazing filler material, the content of Li is 0.3 mass% or less.

From the standpoint of inhibiting the growth of the oxide film, the Li content of the brazing filler material is preferably 0.05 mass% or less.

### (Remainder of brazing filler material: Al and unavoidable impurities)

It is preferable that the remainder of the brazing filler material is Al and unavoidable impurities. Examples of the unavoidable impurities in the brazing filler material include Fe, Ca, and Be, and these elements may be contained so long as the effect of the invention is not prevented. Specifically, 0.35 mass% or less of Fe, 0.05 mass% or less of Ca, 0.01 mass% or less of Be, and less than 0.01 mass% of other element may be contained. So long as the contents of these elements do not exceed the given values, the inclusion of these elements does not prevent the effect of the invention and is acceptable, regardless of whether these elements are contained as unavoidable impurities or are added intentionally.

Although Mn, Ti, Cr, Zr, Zn, Sr, Na, Sb, rare-earth elements, and Li, which are described above, may be intentionally added, these elements may be contained as unavoidable impurities.

### [Thickness of the Aluminum Alloy Brazing Sheet]

The thickness of the brazing sheet in this embodiment is not particularly limited. In the case of application to tube materials, the thickness of the brazing sheet is preferably 0.5 mm or less, more preferably 0.4 mm or less, and is preferably 0.05 mm or larger.

In the case of application to side support materials, header materials, or tank materials, the thickness of the brazing sheet in this embodiment is preferably 2.0 mm or less, more preferably 1.5 mm or less, and is preferably 0.5 mm or larger.

In the case of application to fin materials, the thickness of the brazing sheet in this embodiment is preferably 0.2 mm or less, more preferably 0.15 mm or less, and is preferably 0.01 mm or larger.

From the standpoint of ensuring a proper brazing filler material thickness without impairing the basic properties including post-brazing strength, the thickness of the brazing sheet in this embodiment is especially preferably 0.5 mm or larger.

The thickness of the brazing filler material of the brazing sheet in this embodiment is not particularly limited regardless of which sheet materials the brazing sheet is applied to. However, the thickness of the brazing filler material is preferably 2 µm or larger, more preferably 50 µm or larger. By regulating the thickness of the brazing filler material to the given value or larger, the amount of Mg that is actually contained in the brazing filler material is large and Mg can be more reliably made to perform the getter function. The thickness of the brazing filler material is preferably 250 µm or less.

The cladding ratio of the brazing filler material in the brazing sheet in this embodiment is not particularly limited regardless of which sheet materials the brazing sheet is applied to. However, the cladding ratio of the brazing filler material is preferably 40% or less, more preferably 30% or less. By regulating the cladding ratio of the brazing filler material to the given value or less, the basic properties including post-brazing strength, the production efficiency, etc. can be prevented or inhibited from decreasing.

### [Other Configurations of the Aluminum Alloy Brazing Sheet]

The brazing sheet in this embodiment was described above using the two-layer configuration shown in FIG. 1 as an example. However, this does not exclude other configurations.

For example, the configuration of the brazing sheet in this embodiment can be modified, in accordance with the desire of the user, by disposing a sacrificial material (sacrificial anticorrosive material) and an intermediate material on the other side of the core material 2 shown in FIG. 1 (i.e., on the side opposite to the side where the brazing filler material 3 has been disposed). A brazing filler material may be further disposed on the other side of the core material 2.

Furthermore, after the sacrificial material and the intermediate material have been disposed on the other side of the core material 2, a brazing filler material may be further disposed on the outer side thereof.

In the case where the brazing sheet in this embodiment has a configuration which includes a core material and two brazing filler materials disposed respectively on both sides of the core material, either of the brazing filler materials may be a brazing filler material which does not satisfy the requirements of the present invention (e.g., an Al-Si alloy, Al-Si-Zn alloy, or Al-Si-Mg alloy such as JIS 4045, 4047, or 4343) so long as the other brazing filler material satisfies the requirements of the present invention. In the case of using a brazing filler material which does not satisfy the requirements of the present invention, a flux may be applied to the surface of the brazing filler material before the brazing sheet is subjected to brazing.

The sacrificial material may be one which has a common composition and has an ability to sacrificially prevent corrosion. For example, JIS-1000 pure aluminum or a JIS-7000 Al-Zn alloy can be used. As the intermediate material, various aluminum alloys can be used depending on required properties.

The alloy numbers shown in this description are based on JIS H 4000:2014 and JIS Z 3263:2002.

The brazing sheet in this embodiment further has excellent corrosion resistance because components of the core material and brazing filler material and the contents of the components have been specified. Consequently, structures obtained by brazing by use of the brazing sheet in this embodiment can be usable in various environments or atmospheres.

Next, a brazing method for an aluminum alloy brazing sheet in this embodiment is described.

### [Brazing Method for the Aluminum Alloy Brazing Sheet]

The brazing method for the aluminum alloy brazing sheet in this embodiment is the so-called flux-less brazing, in which no flux is used. In this method, the brazing sheet is heated in an inert gas atmosphere under given thermal conditions.

### (Heating conditions: temperature-rising rate)

In the case where the rate of temperature rising from 350°C to 560°C when the brazing sheet in this embodiment is heated (brazed) is less than 1°C/min, it becomes likely to occur that Mg in the core material and brazing filler material diffuses excessively to a surface-layer portion of the brazing filler material during this temperature rising to yield MgO in the surface of the brazing filler material, and this may result in a decrease in brazing property. Meanwhile, in the case where the rate of temperature rising from 350°C to 560°C exceeds 500°C/min, it becomes likely to occur that Mg in the core material and brazing filler material does not properly diffuse to a surface-layer portion of the brazing filler material and be hence insufficient in getter function, and this may result in a decrease in brazing property.

Consequently, the rate of temperature rising from 350°C to 560°C is preferably 1°C/min or more and 500°C/min or less.

From the standpoint of further reducing the possibility of MgO being yielded in the surface of the brazing filler material, the rate of temperature rising from 350°C to 560°C is preferably 10°C/min or more. From the standpoint of more reliably performing the getter function, the rate of temperature rising from 350°C to 560°C is preferably 300°C/min or lower.

Meanwhile, the rate of temperature rising from 560°C is not particularly limited, and may be, for example, 5°C/min or more and 1,000°C/min or less.

Although the rate of temperature rising from 560°C to an actual heating temperature (a given maximum temperature within the heating-temperature range which will be described later) is not particularly limited, the rate may be in the same range as the rate of temperature rising from 350°C to 560°C. Meanwhile, the rate of temperature declining from the actual heating temperature to 560°C is also not particularly limited, and may be in the same range as the rate of temperature declining from 560°C.

### (Heating conditions: heating temperature, holding period)

The heating temperature (brazing-filler melting temperature) in heating the brazing sheet in this embodiment is 560°C or more and 620°C or less, at which the brazing filler material melts properly, and is preferably 580°C or more and 620°C or less. In the case where the period of holding the brazing sheet at a temperature within that range is less than 10 seconds, the time required for causing the brazing phenomena (destruction of an oxide film, decrease in the oxygen concentration of the atmosphere, and flow of the molten brazing filler to portions to be joined) to occur might not be ensured.

Consequently, the holding period in heating at a temperature in the range of from 560°C to 620°C (preferably at a temperature in the range of from 580°C to 620°C) is preferably 10 seconds or longer.

From the standpoint of causing the brazing phenomena to occur more reliably, the holding period in heating at a temperature in the range of from 560°C to 620°C (preferably at a temperature in the range of from 580°C to 620°C) is preferably 30 seconds or longer, more preferably 60 seconds or longer. Meanwhile, there is no particular upper limit on the holding period, but the holding period may be 1,500 seconds or less.

### (Inert gas atmosphere)

The atmosphere in which the brazing sheet in this embodiment is heated (brazed) is an inert gas atmosphere. For example, the atmosphere is a nitrogen gas atmosphere, an argon gas atmosphere, a helium gas atmosphere, or a mixed-gas atmosphere obtained by mixing two or more of these gases. The inert gas atmosphere preferably is an atmosphere having an oxygen concentration which is as low as possible. Specifically, the oxygen concentration is preferably 50 ppm or less, more preferably 10 ppm or less.

The brazing method for the aluminum alloy brazing sheet in this embodiment can be carried out at ordinary pressure (atmospheric pressure), without the need of making the atmosphere vacuum.

Usually, members to be joined are assembled (assembly step) so as to come into contact with the brazing filler material of the brazing sheet in this embodiment, before the brazing sheet is subjected to the heating (brazing step). Before the assembly step, the brazing sheet may be formed into a desired shape or structure (forming step).

The brazing method for the brazing sheet in this embodiment (in other words, a method for producing a structure in which a member to be joined is brazed to the brazing sheet) is as described above. Conditions which were not shown above may be the same as common ones. It is a matter of course that the conditions can be suitably modified so long as the effects of the treatment can be obtained.

The brazing method for the brazing sheet in this embodiment attains excellent corrosion resistance because components of the core material and brazing filler material of the brazing sheet used and the contents of the components have been specified. Consequently, the brazed structure obtained by the brazing method for the brazing sheet in this embodiment can be used in various environments or atmospheres.

Next, a method for producing an aluminum alloy brazing sheet in this embodiment is described.

### [Method for producing the Aluminum Alloy Brazing Sheet]

A method for producing the brazing sheet in this embodiment is not particularly limited. For example, the brazing sheet is produced by a common production method for clad metals. An example thereof is described below.

First, aluminum alloys respectively having the compositions of the core material and brazing filler material are melted and cast and are then subjected, depending on need, to facing (surface smoothing treatment of slab) and a homogenizing treatment, thereby obtaining respective slabs. The slab for the brazing filler material is hot-rolled to a given thickness, and is then combined with the slab for the core material and hot-rolled by an ordinary method to obtain a clad metal. Thereafter, this clad metal is cold-rolled and subjected, depending on need, to process annealing and final cold-rolling, and is subjected, depending on need, to final annealing.

The homogenizing treatment is conducted preferably at 400°C or more and 600°C or less for from 1 to 20 hours, and the process annealing is conducted preferably at 300°C or more and 450°C or less for from 1 to 20 hours. The final annealing is conducted preferably at 150°C or more and 450°C or less for from 1 to 20 hours. In the case of conducting the final annealing, the process annealing can be omitted. Thermal refining of any of H1n, H2n, H3n, and O (JIS H 0001:1998) may be performed.

A method for producing the aluminum alloy brazing sheet in this embodiment is as described above. Conditions for each step which were not shown above may be the same as common ones. It is a matter of course that the conditions can be suitably modified so long as the effects of the processing in each step can be produced.

### EXAMPLES

Next, the aluminum alloy brazing sheet in the present invention is described in detail by comparing Examples which satisfy the requirements in the present invention, and Comparative Examples which do not satisfy the requirements in the present invention.

### [Production of Specimens]

Core materials respectively having the compositions shown in Table 1 were produced by casting, followed by subjecting the core materials to a homogenizing treatment of 500°C × 10 hr and to both-surface facing to a given thickness. Meanwhile, brazing filler materials respectively having the compositions shown in Table 2 were produced by casting, followed by subjecting the brazing filler materials to a homogenizing treatment of 500°C × 10 hr and then hot-rolled to a given thickness to produce hot-rolled sheets. Each core material was combined with any of the brazing filler materials and hot-rolled to obtain a clad metal. Thereafter, each clad metal was cold-rolled to have a thickness of 0.4 mm (degree of cladding with the brazing filler material, 10%) and subjected to final annealing of 400°C × 5 hr to produce a brazing sheet having a two-layer structure (O-tempered material) as a specimen.

Specimens A65 and A66 were produced in thicknesses different from the above (i.e., specimen A65 had a thickness of 0.6 mm and a cladding ratio of the brazing filler material of 10%, and specimen A66 had a thickness of 0.8 mm and a cladding ratio of the brazing filler material of 10%), while other production conditions are the same.

Shown below are conditions for brazing-corresponding heating, methods for evaluating brazing properties and corrosion resistance, and criterial for the evaluation.

### [Brazing-corresponding Heating]

Brazing-corresponding heating was conducted in a nitrogen atmosphere with an oxygen concentration of 10 ppm under the conditions of a rate of temperature rising from 350°C to 560°C of 30°C/min and a period of holding at temperatures in the range of from 580 to 620°C of 180 seconds.

The rate of temperature rising from 560°C to a maximum temperature was the same as the rate of temperature rising from 350°C to 560°C, and the rate of temperature declining in each range was 100°C/min.

### [Evaluation of Brazing Properties]

Brazing properties were evaluated by the evaluation method described in "Aluminum Brazing Handbook (revised edition)" (Japan Light Metal Welding Association, published in March 3, 2003), author: TAKEMOTO Tadashi, et al., pp. 132-136.

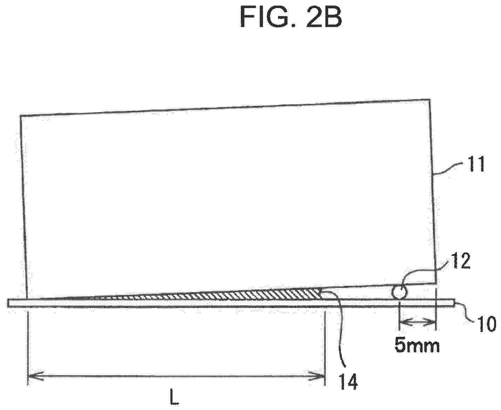

Specifically, a test piece having areal dimensions of 25 mm × 55 mm was cut out of a specimen which had not undergone the brazing-corresponding heating. As shown in FIG. 2A and FIG. 2B, an upper sheet 11 (the test piece (25 mm (width) × 55 mm (length)) was disposed on and perpendicularly to a horizontally placed lower sheet 10 (3003 Al alloy sheet (1.0 mm (thickness) × 25 mm (width) × 60 mm (length)), with a stainless-steel spacer 12 having a diameter of 2 mm interposed therebetween so that a given clearance was formed. The upper sheet 11 was fixed with a wire 13. Reference numeral 14 in FIG. 2B denotes a "fillet".

The two sheets were bonded to each other by brazing under the conditions for brazing-corresponding heating described above. After the bonding by brazing, the length (L) over which the gap between the lower sheet and the upper sheet had been filled (filled-gap length) was measured to convert the brazing properties into a numeral.

The thus-evaluated brazing properties, strictly speaking, are gap-filling properties, which are required for filling the gap between bonding surfaces of assembled members or the gap between bonding surfaces that is formed during brazing by the thermal deformation of a brazing sheet or a member to be bonded.

In the evaluation of brazing properties, the specimens which gave a filled-gap length of 45 mm or larger were rated as "*", those which gave a filled-gap length of 35 mm or larger but less than 45 mm were rated as "∞", those which gave a filled-gap length of 25 mm or larger but less than 35 mm were rated as "○", those which gave a filled-gap length of 15 mm or larger but less than 25 mm were rated as "Δ", and those which gave a filled-gap length less than 15 mm were rated as "×". In the evaluation, "*", "∞", "○", and "Δ" are acceptable, and "×" is unacceptable.

### [Evaluation of Corrosion Resistance]

A test piece having areal dimensions of 50 mm × 50 mm was cut out of a specimen which had undergone the brazing-corresponding heating. This test piece was sealed with a sealing tape so that the entire core material, the entire edge surfaces, and the 5-mm-wide peripheral region of the surface of the brazing filler material were covered with the sealing tape to leave a test surface (40 mm × 40 mm) on the brazing filler material side. The sealed test piece was immersed in OY water (Cl⁻: 195 mass ppm; SO₄²⁻: 60 mass ppm; Cu²⁺: 1 mass ppm; Fe³⁺: 30 mass ppm; pH: 3.0) to conduct an immersion test for 20 days. Specifically, in this immersion test, the OY water was heated from room temperature to 88°C over 1 hour, held at 88°C for 7 hours, subsequently cooled to room temperature over 1 hour, and then held at room temperature for 15 hours. A series of these steps was one cycle and the cycle, which took one day, was repeated over 20 days.

After the immersion test, a cross-section of the most severely corroded region in the test surface was examined with an optical microscope to determine the mode of corrosion and the depth of corrosion.

In the evaluation of corrosion resistance, the specimens which had a depth of corrosion of 25 µm or less were rated as "*", those which had a depth of corrosion larger than 25 µm but not larger than 50 µm were rated as "∞", those which had a depth of corrosion larger than 50 µm but not larger than 75 µm were rated as "○", those which had a depth of corrosion larger than 75 µm but not larger than 100 µm were rated as "Δ", and those which had a depth of corrosion larger than 100 µm were rated as "×". In the evaluation, "*", "∞", "○", and "Δ" are acceptable, and "×" is unacceptable.

The specimens which had been rated as "×" in the evaluation of brazing properties were not evaluated for corrosion resistance.

The compositions of the core materials and the compositions of the brazing filler materials are shown respectively in Table 1 and Table 2 below, and the configurations of the specimens and the results of the evaluation thereof are shown in Table 3. The remainder of each core material in Table 1 and of each brazing filler material in Table 2 is Al and unavoidable impurities. Symbol "-" in Tables 1 and 2 indicates that the element was not contained (the content was a detection limit or less). The values of "0.13C_{Mg}^{-0.3}" and "0.58C_{Mg}^{0.45}" shown in Table 3 are values obtained by rounding off to the nearest hundredth.

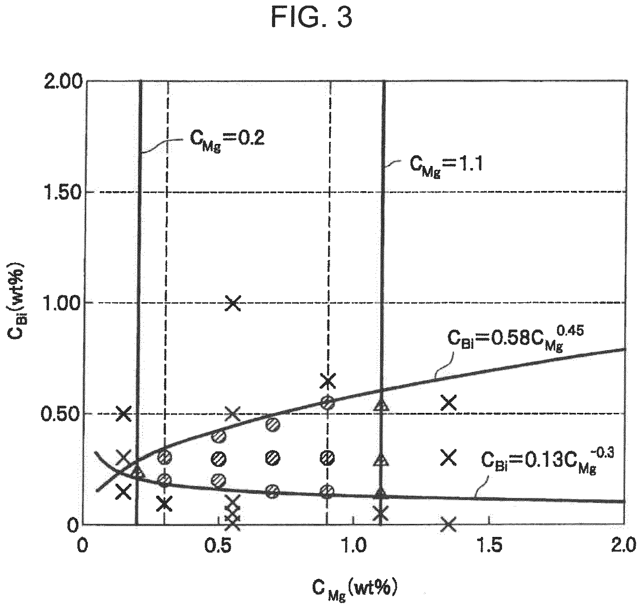

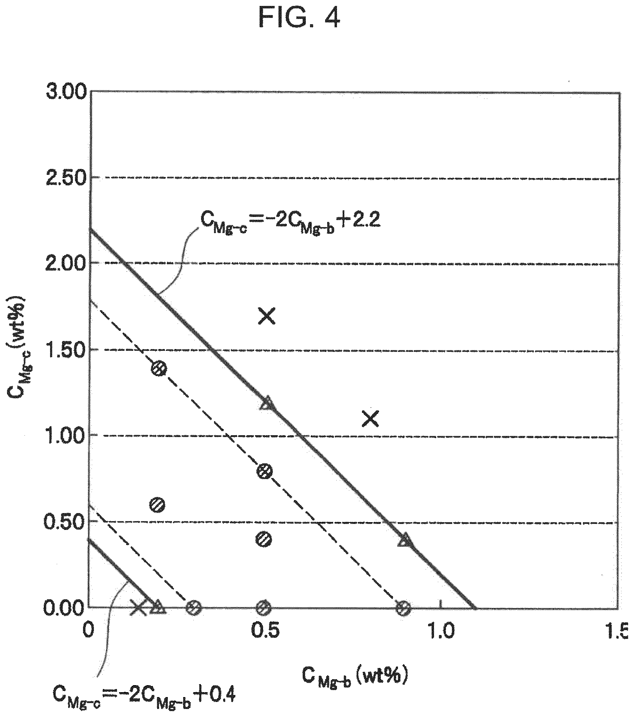

Relationships between "C_{Bi}" and "C_{Mg}" in some of the specimens in Table 3 are shown in FIG. 3 as a graph. Relationships between "C_{Mg-b}" and "C_{Mg-c}" in some of the specimens in Table 3 are shown in FIG. 4 as a graph. In FIG. 3 and FIG. 4, "○" and "Δ" indicate specimens which satisfy requirements specified in the present invention and, in particular, the specimens indicated by "○" satisfy preferred requirements specified in the present invention. The specimens indicated by "×" do not satisfy the requirements specified in the present invention.

**[Table 1]**

| Core material No. | Composition of core material (mass%) 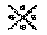 | | | | | | | | |
|---|---|---|---|---|---|---|---|---|---|
| | Mg | Mn | Si | Cu | Fe | Ti | Cr | Zr | Li |
| C1 | - | - | - | - | - | - | - | - | - |
| C2 | 0.40 | - | - | - | - | - | - | - | - |
| C3 | 1.20 | - | - | - | - | - | - | - | - |
| C4 | - | 1.50 | - | - | - | - | - | - | - |
| C5 | - | 2.00 | 0.50 | - | - | - | - | - | - |
| C6 | - | 1.70 | 0.30 | 1.50 | - | - | - | - | - |
| C7 | - | 0.90 | 0.90 | 0.30 | 0.70 | - | - | - | - |
| C8 | - | 1.30 | 0.80 | 0.70 | - | 0.20 | - | - | - |
| C9 | - | 1.40 | 0.50 | 2.00 | - | 0.10 | 0.20 | - | - |
| C10 | - | 0.50 | 0.30 | 1.20 | - | 0.10 | - | 0.20 | - |
| C11 | 0.40 | 1.00 | - | - | - | - | - | - | - |
| C12 | 0.40 | 1.60 | 0.40 | 0.60 | - | - | - | - | - |
| C13 | 0.40 | 1.40 | 0.20 | 1.60 | - | 0.20 | - | - | - |
| C14 | 1.20 | 0.90 | - | - | - | - | - | - | - |
| C15 | 1.20 | 1.40 | 0.30 | 0.50 | - | - | - | - | - |
| C16 | 1.20 | 1.30 | 0.20 | 0.40 | - | 0.10 | - | - | - |
| C17 | 0.80 | 1.30 | 0.50 | 0.30 | - | 0.15 | - | - | - |
| C18 | 0.60 | 1.50 | 0.20 | 0.70 | - | 0.20 | - | - | - |
| C19 | 1.40 | 1.40 | 0.80 | 0.80 | - | 0.10 | - | - | - |
| C20 | 1.70 | 1.20 | 0.10 | 0.90 | - | 0.10 | - | - | - |
| C21 | 0.50 | 1.00 | 0.30 | 1.30 | - | 0.20 | - | - | - |
| C22 | 0.20 | 0.90 | 0.40 | 1.00 | - | 0.15 | - | - | - |
| C23 | 1.10 | 1.10 | 0.60 | 0.50 | - | 0.10 | - | - | - |
| C24 | - | 1.40 | 0.80 | 0.50 | - | 0.15 | - | - | 0.15 |
| C25 | 0.40 | 1.50 | 0.20 | 1.00 | - | 0.10 | - | - | 0.10 |

| | | | | | | | | | |
|---|---|---|---|---|---|---|---|---|---|
| 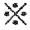 Remainder: Al and unavoidable impurities | | | | | | | | | |

**[Table 2]**

| Brazing filler material No. | Components of brazing filler material (mass%) 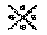 | | | | | | | | | | | | | | | | | |
|---|---|---|---|---|---|---|---|---|---|---|---|---|---|---|---|---|---|---|
| | Si | Bi | Mg | Mn | Ti | Cr | Zr | Zn | Sr | Na | Sb | Sc | Y | La | Ce | Nd | Dy | Li |
| F1 | 10 | 0.30 | 0.50 | - | - | - | - | - | - | - | - | - | - | - | - | - | - | - |
| F2 | 10 | 0.20 | 0.50 | - | - | - | - | - | - | - | - | - | - | - | - | - | - | - |
| F3 | 11 | 0.40 | 0.50 | - | - | - | - | - | - | - | - | - | - | - | - | - | - | - |
| F4 | 9 | 0.15 | 0.50 | - | - | - | - | - | - | - | - | - | - | - | - | - | - | - |
| F5 | 10 | 0.55 | 0.50 | - | - | - | - | - | - | - | - | - | - | - | - | - | - | - |
| F6 | 4 | 0.30 | 0.50 | - | - | - | - | - | - | - | - | - | - | - | - | - | - | - |
| F7 | 13 | 0.30 | 0.50 | - | - | - | - | - | - | - | - | - | - | - | - | - | - | - |
| F8 | 10 | 0.30 | 0.50 | - | - | - | - | 3 | - | - | - | - | - | - | - | - | - | - |
| F9 | 10 | 0.30 | 0.50 | - | - | - | - | - | 0.02 | - | - | - | - | - | - | - | - | - |
| F10 | 9 | 0.30 | 0.50 | - | - | - | - | - | - | 0.003 | - | - | - | - | - | - | - | - |
| F11 | 10 | 0.30 | 0.50 | - | - | - | - | - | 0.01 | - | 0.2 | - | - | - | - | - | - | - |
| F12 | 10 | 0.30 | 0.50 | - | - | - | - | - | - | - | - | 0.4 | - | - | - | - | - | - |
| F13 | 9 | 0.30 | 0.50 | - | - | - | - | - | - | - | - | - | 0.3 | - | - | - | - | - |
| F14 | 10 | 0.30 | 0.50 | - | - | - | - | - | - | - | - | - | - | 0.1 | - | - | - | - |
| F15 | 11 | 0.30 | 0.50 | - | - | - | - | - | - | - | - | - | - | - | 0.6 | - | - | - |
| F16 | 9 | 0.30 | 0.50 | - | - | - | - | - | - | - | - | - | - | - | - | 0.2 | - | - |
| F17 | 10 | 0.30 | 0.50 | - | - | - | - | - | - | - | - | - | - | - | - | - | 0.4 | - |
| F18 | 11 | 0.30 | 0.50 | - | - | - | - | - | - | - | - | 0.1 | 0.2 | - | - | - | - | - |
| F19 | 10 | 0.30 | 0.50 | - | - | - | - | - | - | - | - | 0.3 | - | 0.1 | - | - | - | - |
| F20 | 10 | 0.30 | 0.50 | - | - | - | - | - | - | - | - | - | 0.05 | 0.1 | 0.1 | - | - | - |
| F21 | 10 | 0.30 | 0.50 | - | - | - | - | - | - | - | - | - | - | - | - | - | - | 0.02 |
| F22 | 9 | 0.30 | 0.50 | - | - | - | - | - | - | - | - | - | - | 0.1 | - | - | - | 0.01 |
| F23 | 10 | 0.15 | 0.50 | - | - | - | - | - | - | - | - | - | - | - | - | - | - | - |
| F24 | 9 | 0.30 | 0.50 | - | - | - | - | - | - | - | - | - | - | - | - | - | - | - |
| F25 | 11 | 0.55 | 0.50 | - | - | - | - | - | - | - | - | - | - | - | - | - | - | - |
| F26 | 9 | 0.20 | 0.30 | - | - | - | - | - | - | - | - | - | - | - | - | - | - | - |
| F27 | 10 | 0.30 | 0.30 | - | - | - | - | - | - | - | - | - | - | - | - | - | - | - |
| F28 | 10 | 0.25 | 0.20 | - | - | - | - | - | - | - | - | - | - | - | - | - | - | - |
| F29 | 11 | 0.20 | 0.20 | - | - | - | - | - | - | - | - | - | - | - | - | - | - | - |
| F30 | 10 | 0.40 | 0.20 | - | - | - | - | - | - | - | - | - | - | - | - | - | - | - |
| F31 | 10 | 0.15 | 0.20 | - | - | - | - | - | - | - | - | - | - | - | - | - | - | - |
| F32 | 10 | 0.30 | 0.20 | - | - | - | - | - | - | - | - | - | - | - | - | - | - | - |
| F33 | 9 | 0.55 | 0.20 | - | - | - | - | - | - | - | - | - | - | - | - | - | - | - |
| F34 | 10 | 0.15 | 0.90 | - | - | - | - | - | - | - | - | - | - | - | - | - | - | - |
| F35 | 9 | 0.30 | 0.90 | - | - | - | - | - | - | - | - | - | - | - | - | - | - | - |
| F36 | 10 | 0.55 | 0.90 | - | - | - | - | - | - | - | - | - | - | - | - | - | - | - |
| F37 | 10 | 0.30 | 0.15 | - | - | - | - | - | - | - | - | - | - | - | - | - | - | - |
| F38 | 10 | 0.01 | 0.30 | - | - | - | - | - | - | - | - | - | - | - | - | - | - | - |
| F39 | 11 | 0.05 | 0.30 | - | - | - | - | - | - | - | - | - | - | - | - | - | - | - |
| F40 | 10 | 0.10 | 0.30 | - | - | - | - | - | - | - | - | - | - | - | - | - | - | - |
| F41 | 9 | 0.50 | 0.30 | - | - | - | - | - | - | - | - | - | - | - | - | - | - | - |
| F42 | 10 | 1.00 | 0.30 | - | - | - | - | - | - | - | - | - | - | - | - | - | - | - |
| F43 | 11 | 0.65 | 0.50 | - | - | - | - | - | - | - | - | - | - | - | - | - | - | - |
| F44 | 9 | 0.05 | 0.50 | - | - | - | - | - | - | - | - | - | - | - | - | - | - | - |
| F45 | 10 | 0.15 | 0.15 | - | - | - | - | - | - | - | - | - | - | - | - | - | - | - |
| F46 | 10 | 0.10 | 0.20 | - | - | - | - | - | - | - | - | - | - | - | - | - | - | - |
| F47 | 10 | 0.55 | 0.80 | - | - | - | - | - | - | - | - | - | - | - | - | - | - | - |
| F48 | 9 | - | 0.80 | - | - | - | - | - | - | - | - | - | - | - | - | - | - | - |
| F49 | 10 | 0.50 | 0.15 | - | - | - | - | - | - | - | - | - | - | - | - | - | - | - |
| F50 | 9 | 0.45 | 0.50 | - | - | - | - | - | - | - | - | - | - | - | - | - | - | - |
| F51 | 10 | 0.45 | | - | - | - | - | - | - | - | - | - | - | - | - | - | - | - |
| F52 | 10 | 0.30 | 0.50 | 0.6 | - | - | - | - | - | - | - | - | - | - | - | - | - | - |
| F53 | 10 | 0.30 | 0.50 | - | 0.2 | - | - | - | - | - | - | - | - | - | - | - | - | - |
| F54 | 10 | 0.30 | 0.50 | - | - | 0.2 | - | - | - | - | - | - | - | - | - | - | - | - |
| F55 | 10 | 0.30 | 0.50 | - | - | - | 0.2 | - | - | - | - | - | - | - | - | - | - | - |
| F56 | 10 | 0.30 | 0.50 | 0.5 | 0.1 | - | - | - | - | - | - | - | - | - | - | - | - | - |
| F57 | 10 | 0.30 | 0.50 | 1.0 | - | 0.1 | - | - | - | - | - | - | - | - | - | - | - | - |

| | | | | | | | | | | | | | | | | | | |
|---|---|---|---|---|---|---|---|---|---|---|---|---|---|---|---|---|---|---|
| 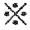 Remainder: Al and unavoidable impurities | | | | | | | | | | | | | | | | | | |

**[Table 3]**

| Specimen No. | Brazing filler material No. | Core material No. | Content, etc. | | | | | | | Evaluation | |
|---|---|---|---|---|---|---|---|---|---|---|---|
| | | | C_{Si} | C_{Bi} | C_{Mg-b} | C_{Mg-c} | C_{Mg} | 0.13 C_{Mg}^{-0.3} | 0.58 C_{Mg}^{0.45} | Brazing property | Corrosion resistance |
| A1 | F1 | C1 | 10 | 0.30 | 0.50 | 0.00 | 0.5 | 0.18 | 0.42 | ∞ | Δ |
| A2 | F1 | C2 | 10 | 0.30 | 0.50 | 0.40 | 0.7 | 0.14 | 0.49 | ∞ | Δ |
| A3 | F1 | C3 | 10 | 0.30 | 0.50 | 1.20 | 1.1 | 0.13 | 0.61 | ○ | Δ |
| A4 | F1 | C4 | 10 | 0.30 | 0.50 | 0.00 | 0.5 | 0.16 | 0.42 | ∞ | Δ |
| A5 | F1 | C5 | 10 | 0.30 | 0.50 | 0.00 | 0.5 | 0.16 | 0.42 | ∞ | Δ |
| A6 | F1 | C6 | 10 | 0.30 | 0.50 | 0.00 | 0.5 | 0.16 | 0.42 | ∞ | ○ |
| A7 | F1 | C7 | 10 | 0.30 | 0.50 | 0.00 | 0.5 | 0.16 | 0.42 | ∞ | ○ |
| A8 | F1 | C8 | 10 | 0.30 | 0.50 | 0.00 | 0.5 | 0.16 | 0.42 | ∞ | ∞ |
| A9 | F1 | C9 | 10 | 0.30 | 0.50 | 0.00 | 0.5 | 0.16 | 0.42 | ∞ | ∞ |
| A10 | F1 | C10 | 10 | 0.30 | 0.50 | 0.00 | 0.5 | 0.16 | 0.42 | ∞ | ∞ |
| A11 | F1 | C11 | 10 | 0.30 | 0.50 | 0.40 | 0.7 | 0.14 | 0.49 | ∞ | Δ |
| A12 | F1 | C12 | 10 | 0.30 | 0.50 | 0.40 | 0.7 | 0.14 | 0.49 | ∞ | ○ |
| A13 | F1 | C13 | 10 | 0.30 | 0.50 | 0.40 | 0.7 | 0.14 | 0.49 | ∞ | ∞ |
| A14 | F1 | C14 | 10 | 0.30 | 0.50 | 1.20 | 1.1 | 0.13 | 0.61 | ○ | Δ |
| A15 | F1 | C15 | 10 | 0.30 | 0.50 | 1.20 | 1.1 | 0.13 | 0.61 | ○ | ○ |
| A16 | F1 | C16 | 10 | 0.30 | 0.50 | 1.20 | 1.1 | 0.13 | 0.61 | ○ | ∞ |
| A17 | F2 | C8 | 10 | 0.20 | 0.50 | 0.00 | 0.5 | 0.16 | 0.42 | ∞ | ∞ |
| A18 | F3 | C8 | 11 | 0.40 | 0.50 | 0.00 | 0.5 | 0.16 | 0.42 | ∞ | ∞ |
| A19 | F4 | C13 | 9 | 0.15 | 0.50 | 0.40 | 0.7 | 0.14 | 0.49 | ∞ | ∞ |
| A20 | F50 | C13 | 9 | 0.45 | 0.50 | 0.40 | 0.7 | 0.14 | 0.49 | ∞ | ∞ |
| A21 | F4 | C16 | 9 | 0.15 | 0.50 | 1.20 | 1.1 | 0.13 | 0.61 | ○ | ∞ |
| A22 | F5 | C16 | 10 | 0.55 | 0.50 | 1.20 | 1.1 | 0.13 | 0.61 | ○ | ∞ |
| A23 | F6 | C8 | 4 | 0.30 | 0.50 | 0.00 | 0.5 | 0.16 | 0.42 | ∞ | ∞ |
| A24 | F7 | C8 | 13 | 0.30 | 0.50 | 0.00 | 0.5 | 0.16 | 0.42 | ∞ | ∞ |
| A25 | F8 | C8 | 10 | 0.30 | 0.50 | 0.00 | 0.5 | 0.16 | 0.42 | ∞ | * |
| A26 | F9 | C8 | 10 | 0.30 | 0.50 | 0.00 | 0.5 | 0.16 | 0.42 | ∞ | ∞ |
| A27 | F10 | C8 | 9 | 0.30 | 0.50 | 0.00 | 0.5 | 0.16 | 0.42 | ∞ | ∞ |
| A28 | F11 | C8 | 10 | 0.30 | 0.50 | 0.00 | 0.5 | 0.16 | 0.42 | ∞ | ∞ |
| A29 | F12 | C8 | 10 | 0.30 | 0.50 | 0.00 | 0.5 | 0.16 | 0.42 | * | ∞ |
| A30 | F13 | C8 | 9 | 0.30 | 0.50 | 0.00 | 0.5 | 0.16 | 0.42 | * | ∞ |
| A31 | F14 | C8 | 10 | 0.30 | 0.50 | 0.00 | 0.5 | 0.16 | 0.42 | * | ∞ |
| A32 | F15 | C8 | 11 | 0.30 | 0.50 | 0.00 | 0.5 | 0.16 | 0.42 | * | ∞ |
| A33 | F16 | C8 | 9 | 0.30 | 0.50 | 0.00 | 0.5 | 0.16 | 0.42 | * | ∞ |
| A34 | F17 | C8 | 10 | 0.30 | 0.50 | 0.00 | 0.5 | 0.16 | 0.42 | * | ∞ |
| A35 | F18 | C8 | 11 | 0.30 | 0.50 | 0.00 | 0.5 | 0.16 | 0.42 | * | ∞ |
| A36 | F19 | C8 | 10 | 0.30 | 0.50 | 0.00 | 0.5 | 0.16 | 0.42 | * | ∞ |
| A37 | F20 | C8 | 10 | 0.30 | 0.50 | 0.00 | 0.5 | 0.16 | 0.42 | * | ∞ |
| A38 | F21 | C8 | 10 | 0.30 | 0.50 | 0.00 | 0.5 | 0.16 | 0.42 | * | ∞ |
| A39 | F1 | C24 | 10 | 0.30 | 0.50 | 0.00 | 0.5 | 0.16 | 0.42 | * | ∞ |
| A40 | F21 | C13 | 10 | 0.30 | 0.50 | 0.40 | 0.7 | 0.14 | 0.49 | * | ∞ |
| A41 | F1 | C25 | 10 | 0.30 | 0.50 | 0.40 | 0.7 | 0.14 | 0.49 | * | ∞ |
| A42 | F22 | C8 | 9 | 0.30 | 0.50 | 0.00 | 0.5 | 0.16 | 0.42 | * | ∞ |
| A43 | F14 | C24 | 10 | 0.30 | 0.50 | 0.00 | 0.5 | 0.16 | 0.42 | * | ∞ |
| A44 | F23 | C17 | 10 | 0.15 | 0.50 | 0.80 | 0.9 | 0.13 | 0.55 | ∞ | ∞ |
| A45 | F24 | C17 | 9 | 0.30 | 0.50 | 0.80 | 0.9 | 0.13 | 0.55 | ∞ | ∞ |
| A46 | F25 | C17 | 11 | 0.55 | 0.50 | 0.80 | 0.9 | 0.13 | 0.55 | ∞ | ∞ |
| A47 | F26 | C8 | 9 | 0.20 | 0.30 | 0.00 | 0.3 | 0.19 | 0.34 | ∞ | ∞ |
| A48 | F27 | C8 | 10 | 0.30 | 0.30 | 0.00 | 0.3 | 0.19 | 0.34 | ∞ | ∞ |
| A49 | F28 | C8 | 10 | 0.25 | 0.20 | 0.00 | 0.2 | 0.21 | 0.28 | ○ | ∞ |
| A50 | F29 | C18 | 11 | 0.20 | 0.20 | 0.60 | 0.5 | 0.16 | 0.42 | ∞ | ∞ |
| A51 | F30 | C18 | 10 | 0.40 | 0.20 | 0.60 | 0.5 | 0.16 | 0.42 | ∞ | ∞ |
| A52 | F31 | C19 | 10 | 0.15 | 0.20 | 1.40 | 0.9 | 0.13 | 0.55 | ∞ | ∞ |
| A53 | F32 | C19 | 10 | 0.30 | 0.20 | 1.40 | 0.9 | 0.13 | 0.55 | ∞ | ∞ |
| A54 | F33 | C19 | 9 | 0.55 | 0.20 | 1.40 | 0.9 | 0.13 | 0.55 | ∞ | ∞ |
| A55 | F34 | C8 | 10 | 0.15 | 0.90 | 0.00 | 0.9 | 0.13 | 0.55 | ∞ | ∞ |
| A56 | F35 | C8 | 9 | 0.30 | 0.90 | 0.00 | 0.9 | 0.13 | 0.55 | ∞ | ∞ |
| A57 | F36 | C8 | 10 | 0.55 | 0.90 | 0.00 | 0.9 | 0.13 | 0.55 | ∞ | ∞ |
| A58 | F36 | C13 | 10 | 0.55 | 0.90 | 0.40 | 1.1 | 0.13 | 0.61 | ○ | ∞ |
| A59 | F52 | C8 | 10 | 0.30 | 0.50 | 0.00 | 0.5 | 0.16 | 0.42 | ○ | ∞ |
| A60 | F53 | C6 | 10 | 0.30 | 0.50 | 0.00 | 0.5 | 0.16 | 0.42 | ○ | ∞ |
| A61 | F54 | C6 | 10 | 0.30 | 0.50 | 0.00 | 0.5 | 0.16 | 0.42 | ○ | ∞ |
| A62 | F55 | C6 | 10 | 0.30 | 0.50 | 0.00 | 0.5 | 0.16 | 0.42 | ○ | ∞ |
| A63 | F56 | C6 | 10 | 0.30 | 0.50 | 0.00 | 0.5 | 0.16 | 0.42 | ○ | ∞ |
| A64 | F57 | C6 | 10 | 0.30 | 0.50 | 0.00 | 0.5 | 0.16 | 0.42 | ○ | ∞ |
| A65 | F1 | C8 | 10 | 0.30 | 0.50 | 0.00 | 0.5 | 0.16 | 0.42 | * | ∞ |
| A66 | F52 | C6 | 10 | 0.30 | 0.50 | 0.00 | 0.5 | 0.16 | 0.42 | ∞ | ∞ |
| A100 | F1 | C20 | 10 | 0.30 | 0.50 | 1.70 | 1.35 | 0.12 | 0.66 | × | not evaluated |
| A101 | F37 | C8 | 10 | 0.30 | 0.15 | 0.00 | 0.15 | 0.23 | 0.25 | × | not evaluated |
| A102 | F38 | C21 | 10 | 0.01 | 0.30 | 0.50 | 0.55 | 0.16 | 0.44 | × | not evaluated |
| A103 | F39 | C21 | 11 | 0.05 | 0.30 | 0.50 | 0.55 | 0.16 | 0.44 | × | not evaluated |
| A104 | F40 | C21 | 10 | 0.10 | 0.30 | 0.50 | 0.55 | 0.16 | 0.44 | × | not evaluated |
| A105 | F41 | C21 | 9 | 0.50 | 0.30 | 0.50 | 0.55 | 0.16 | 0.44 | × | not evaluated |
| A106 | F42 | C21 | 10 | 1.00 | 0.30 | 0.50 | 0.55 | 0.16 | 0.44 | × | not evaluated |
| A107 | F43 | C17 | 11 | 0.65 | 0.50 | 0.80 | 0.9 | 0.13 | 0.55 | × | not evaluated |
| A108 | F44 | C16 | 9 | 0.05 | 0.50 | 1.20 | 1.1 | 0.13 | 0.61 | × | not evaluated |
| A109 | F45 | C8 | 10 | 0.15 | 0.15 | 0.00 | 0.15 | 0.23 | 0.25 | × | not evaluated |
| A110 | F46 | C22 | 10 | 0.10 | 0.20 | 0.20 | 0.3 | 0.19 | 0.34 | × | not evaluated |
| A111 | F47 | C23 | 10 | 0.55 | 0.80 | 1.10 | 1.35 | 0.12 | 0.66 | × | not evaluated |
| A112 | F48 | C23 | 9 | 0.00 | 0.80 | 1.10 | 1.35 | 0.12 | 0.66 | × | not evaluated |
| A113 | F49 | C8 | 10 | 0.50 | 0.15 | 0.00 | 0.15 | 0.23 | 0.25 | × | not evaluated |
| A114 | F51 | C16 | 10 | 0.45 | 0.00 | 1.20 | 0.6 | 0.15 | 0.46 | ear crackingoccurred in hot rolling | |

### [Examination of the Results]

Specimens A1 to A66 satisfied the requirements specified in the present invention. Specimens A1 to A66 hence gave results in which "brazing property" was acceptable and "corrosion resistance" was acceptable.

It was found that the specimens which satisfied the requirements specified in the present invention and which, due to this, were acceptable with respect to "brazing property" and "corrosion resistance" lay in the range surrounded by C_{Bi}=0.13C_{Mg}^{-0.3}, C_{Bi}=0.58C_{Mg}^{0.45}, C_{Mg}=0.2, and C_{Mg}=1.1 in FIG. 3.

It was also found that the specimens which satisfied the requirements specified in the present invention and which, due to this, were acceptable with respect to "brazing property" and "corrosion resistance" lay between C_{Mg-c}=-2C_{Mg-b}+0.4 and C_{Mg-c}=-2C_{Mg-b}+2.2 in FIG. 4.

Meanwhile, specimens A100 to A114 did not satisfy the requirements specified in the present invention and hence gave results in which the brazing properties were unacceptable or ear cracking occurred in hot rolling. Specifically, the results are as follows.

Specimen A100 had a large value of C_{Mg} and this is presumed to have undesirably promoted the formation of MgO in the surface of the brazing filler material. As a result, the brazing properties were rated as "×".

Specimen A101 had a large value of C_{Bi}, and it is presumed that an oxide film based on Bi simple substance or Bi containing compounds undesirably inhibited the getter function. Furthermore, specimen A101 had a small value of C_{Mg} and this is presumed to have resulted in an insufficient getter function. As a result, the brazing properties were rated as "×".

Specimen A102 had a small value of C_{Bi}, and it is presumed that Mg was unable to be sufficiently trapped and this undesirably promoted the formation of MgO in the surface of the brazing filler material. As a result, the brazing properties were rated as "x".

Specimen A103 had a small value of C_{Bi}, and it is presumed that Mg was unable to be sufficiently trapped and this undesirably promoted the formation of MgO in the surface of the brazing filler material. As a result, the brazing properties were rated as "×".

Specimen A104 had a small value of C_{Bi}, and it is presumed that Mg was unable to be sufficiently trapped and this undesirably promoted the formation of MgO in the surface of the brazing filler material. As a result, the brazing properties were rated as "×".

Specimen A105 had a large value of C_{Bi}, and it is presumed that an oxide film based on Bi simple substance or Bi containing compounds undesirably inhibited the getter function. As a result, the brazing properties were rated as "×".

Specimen A106 had a large value of C_{Bi}, and it is presumed that an oxide film based on Bi simple substance or Bi containing compounds undesirably inhibited the getter function. As a result, the brazing properties were rated as "×".

Specimen A107 had a large value of C_{Bi}, and it is presumed that an oxide film based on Bi simple substance or Bi containing compounds undesirably inhibited the getter function. As a result, the brazing properties were rated as "×".

Specimen A108 had a small value of C_{Bi}, and it is presumed that Mg was unable to be sufficiently trapped and this undesirably promoted the formation of MgO in the surface of the brazing filler material. As a result, the brazing properties were rated as "×".

Specimen A109 had a small value of C_{Bi}, and it is presumed that Mg was unable to be sufficiently trapped and this undesirably promoted the formation of MgO in the surface of the brazing filler material. Furthermore, the value of C_{Mg} was small and this is presumed to have resulted in an insufficient getter function. As a result, the brazing properties were rated as "×".

Specimen A110 had a small value of C_{Bi}, and it is presumed that Mg was unable to be sufficiently trapped and this undesirably promoted the formation of MgO in the surface of the brazing filler material. As a result, the brazing properties were rated as "×".

Specimen A111 had a large value of C_{Mg} and this is presumed to have undesirably promoted the formation of MgO in the surface of the brazing filler material. As a result, the brazing properties were rated as "×".

Specimen A112 had a small value of C_{Bi}, and it is presumed that Mg was unable to be sufficiently trapped and this undesirably promoted the formation of MgO in the surface of the brazing filler material. Furthermore, the value of C_{Mg} was large and this is presumed to have undesirably promoted the formation of MgO in the surface of the brazing filler material. As a result, the brazing properties were rated as "×".

Specimen A113 had a large value of C_{Bi}, and it is presumed that an oxide film based on Bi simple substance or Bi containing compounds undesirably inhibited the getter function. Furthermore, the value of C_{Mg} was small and this is presumed to have resulted in an insufficient getter function. As a result, the brazing properties were rated as "×".

Specimen A114 had a small value of C_{Mg-b}, and it is presumed that Bi simple substance or Bi containing compounds melted during hot rolling to induce hot-rolling cracking (ear cracking).

The aluminum alloy brazing sheets in the present invention were able to be ascertained, from these results, to be excellent in terms of brazing property and corrosion resistance.

While the invention has been described in detail and with reference to specific embodiments thereof, it will be apparent to one skilled in the art that various changes and modifications can be made therein without departing from the spirit and scope thereof.

This application is based on Japanese patent application No. 2017-103074 filed on May 24, 2017, the contents thereof being incorporated herein by reference.

### INDUSTRIAL APPLICABILITY

The aluminum alloy brazing sheet of the present invention has excellent brazing properties when the aluminum alloy brazing sheet is used in flux-less brazing in a non-vacuum inert gas atmosphere, and is useful especially for producing a heat exchanger.

### REFERENCE SIGNS LIST

- 1: Aluminum alloy brazing sheet (brazing sheet)
- 2: Core material
- 3: Brazing filler material

## Claims

1. An aluminum alloy brazing sheet comprising a core material and a brazing filler material disposed on at least one surface of the core material, wherein:
the core material has an Mg content of 2.0 mass% or less (including 0 mass%), with the remainder being Al and unavoidable impurities;
the brazing filler material comprises Si, Bi, and Mg, with the remainder being Al and unavoidable impurities; and
the following relationships are satisfied:
3≤C_{Si}≤13 ;
0.13C_{Mg}^{-0.3}≤C_{Bi}≤0.58C_{Mg}^{0.45};
C_{Mg-b}≥0.1; and
0.2≤C_{Mg}≤1.1,
wherein Csi is an Si content of the brazing filler material in mass%, C_{Bi} is a Bi content of the brazing filler material in mass%, C_{Mg-b} is an Mg content of the brazing filler material in mass%, C_{Mg-c} is an Mg content of the core material in mass% and C_{Mg} is defined as C_{Mg}=C_{Mg-b}+C_{Mg-c}/2.

2. The aluminum alloy brazing sheet according to claim 1, wherein the brazing filler material further comprises at least one selected from the following (a) to (e):
(a) one or more of 2.0 mass% or less of Mn, 0.3 mass% or less of Ti, 0.3 mass% or less of Cr, and 0.3 mass% or less of Zr;
(b) 5.0 mass% or less of Zn;
(c) one or more of 0.10 mass% or less of Sr, 0.050 mass% or less of Na, and 0.5 mass% or less of Sb;
(d) 1.0 mass% or less of one or more rare-earth elements; and
(e) 0.3 mass% or less of Li.

3. The aluminum alloy brazing sheet according to claim 1, wherein the core material further comprises at least one selected from the following (f) to (k):
(f) 2.5 mass% or less of Mn;
(g) 1.2 mass% or less of Si;
(h) 3.0 mass% or less of Cu;
(i) 1.5 mass% or less of Fe;
(j) one or more of 0.5 mass% or less of Ti, 0.5 mass% or less of Cr, and 0.5 mass% or less of Zr; and
(k) 0.3 mass% or less of Li.

4. The aluminum alloy brazing sheet according to claim 2, wherein the core material further comprises at least one element selected from among the following (f) to (k):
(f) 2.5 mass% or less of Mn;
(g) 1.2 mass% or less of Si;
(h) 3.0 mass% or less of Cu;
(i) 1.5 mass% or less of Fe;
(j) one or more of 0.5 mass% or less of Ti, 0.5 mass% or less of Cr, and 0.5 mass% or less of Zr; and
(k) 0.3 mass% or less of Li.

5. The aluminum alloy brazing sheet according to claim 1, wherein the brazing filler material has a thickness of 50 µm or more.

6. The aluminum alloy brazing sheet according to claim 2, wherein the brazing filler material has a thickness of 50 µm or more.

7. The aluminum alloy brazing sheet according to claim 3, wherein the brazing filler material has a thickness of 50 µm or more.

8. The aluminum alloy brazing sheet according to claim 4, wherein the brazing filler material has a thickness of 50 µm or more.
